# EUROPÄISCHE PATENTSCHRIFT

(11) **EP 3 724 527 B1**
(45) Veröffentlichungstag und Bekanntmachung des Hinweises auf die Patenterteilung: **23.02.2022**
(21) Anmeldenummer: 18826934.4
(22) Anmeldetag: 10.12.2018
(51) Int. Cl.: F16D 11/10, F16D 11/14, F16D 21/04, F16D 23/02

(54) **KLAUENSCHALTUNG**
SPEED COUPLING
DISPOSITIF DE CRABOTAGE À ÉCHAPPEMENT

(30) Priorität: 12.12.2017 DE 102017129602
(43) Veröffentlichungstag der Anmeldung: 21.10.2020
(73) Patentinhaber: Schaeffler Technologies AG & Co. KG, 91074 Herzogenaurach (DE)
(72) Erfinder: ZEISS, Tony, 90491 Nürnberg (DE)
(86) Internationale Anmeldenummer: PCT/DE2018/101005
(87) Internationale Veröffentlichungsnummer: WO 2019/114878

(56) Entgegenhaltungen:
- EP-A1- 0 756 098
- DE-A1- 10 101 864
- DE-A1- 10 101 864
- DE-A1-102012 221 056
- DE-A1-102012 221 056
- DE-B- 1 054 331
- US-A- 4 776 228

## Beschreibung

Die Erfindung betrifft eine Klauenschaltung eines Schaltgetriebes zur Kupplung eines Losrades mit einer Getriebewelle mittels einer axial gegenüber der Getriebewelle verschiebbar angeordneten Schiebemuffe und ein Verfahren zum Schalten der Klauenschaltung.

Schaltgetriebe für elektromotorisch angetriebene Kraftfahrzeuge oder Hybridfahrzeuge mit mehr als einem Gang weisen das Problem auf, dass während eines Schaltvorganges eine Zugkraftunterbrechung entstehen kann. Zur Verkürzung der Zugkraftunterbrechung können Klauenkupplungen eingesetzt werden, die im Allgemeinen große Taschen zur Aufnahme der Klauen aufweisen müssen, damit die Klaue ungehindert einspuren kann. Die Folge sind allerdings Geräusche, sogenannte Lastschläge, die bei Lastwechselsituationen auftreten können. Geräusche treten aber auch beim Schalten, durch den axialen Anschlag und während des Drehzahlangleiches - Tangentialer Schlag - auf. Zusätzlich sind hohe Kräfte zum Einlegen der Klaue notwendig.

Durch die US 2002 / 01 44 563 A1 ist eine Klauenschaltung eines Schaltgetriebes zur Kupplung eines Losrades mit einer Getriebewelle und mittels einer axial gegenüber der Getriebewelle verschiebbar und drehfest angeordneten Schiebemuffe bekannt.

Die US 2010 / 025 7969 A1 zeigt ein mehrgängiges Schaltgetriebe mit einer Klauenschaltung, wobei eine auf einer Getriebewelle axial verschiebbar angeordnete Schiebemuffe vorgesehen ist, die mittels vorstehender Eingriffselemente in Zahneingriff mit Klauen eines Losrades bringbar sind, das auf der Getriebewelle frei drehbar gelagert ist. Hierbei greifen jeweils zwei Eingriffselemente mit geringem Spiel in eine zwischen den Klauen vorgesehene Zahnlücke ein.

Die EP 2 098 742 B1 zeigt ein mehrgängiges Schaltgetriebe mit einer Anzahl Klauenkupplungsmuffen zur Verbindung von auf Getriebewellen angeordneten Freilaufzahnrädern, wobei jede Klauenkupplungsmuffe in fünf unterschiedliche Positionen schaltbar ist, erstens eine Neutralposition, zweitens eine verriegelte Gangposition, drittens eine verriegelte Gangposition mit einem nicht verriegelten Wiederkopplungsspiel, viertens eine eingerückte Gangposition mit einem großen Wiederkopplungsspiel und fünftens eine selbst auswerfbare Position, wobei zusätzlich ein Reibungsorgan vorgesehen ist, welches vorübergehend ein Moment an die Gangräder bei Gangwechseln übertragt. Die Klauen der Muffen und der Freilaufzahnräder sind selbst auswerfbar ausgebildet, wobei die selbst auswerfbaren Klauen den vorhergehenden Gang auswerfen, wenn ein neuer Gang eingerückt wird.

Die WO 2017 / 088 961 A1 zeigt eine Klauenkupplung für einen Antriebsstrang eines Kraftfahrzeuges, wobei eine erste Kupplungshälfte ein erstes Klauenelement mit einer Sperrverzahnung und ein relativ zum ersten Klauenelement verdrehbares zweites Klauenelement mit einer Fangverzahnung aufweist, wobei die Sperrverzahnung und die Fangverzahnung unterschiedliche Verzahnungsgeometrien aufweisen. Eine zweite Kupplungshälfte weist eine Klauenverzahnung auf, die gemeinsam mit den Fangzähnen in, zwischen den Sperrzähnen des ersten Klauenelements gebildeten, Zahnlücken eingreifen.

Weitere Klauenschaltungen sind in DE 101 01 864 A1 und in DE 10 2012221 056 A1 gezeigt.

Der Erfindung liegt die Aufgabe zugrunde, eine Klauenschaltung für ein Schaltgetriebe zu schaffen, mit welchem ein schneller Schaltvorgang ermöglicht wird und außerdem die radialen Spiele nach dem Einspuren minimiert werden, um somit Schläge während des Lastwechsels zu minimieren und ein Verfahren zum Schalten der Klauenschaltung anzugeben.

Die Aufgabe wird erfindungsgemäß durch die Merkmale 1 und 10 gelöst.

Es ist ein besonderer Vorteil der Erfindung, dass die Klauenschaltung eine ringförmige Schaltkulisse aufweist, an welcher die Schaltklauen angeordnet sind. Darüber hinaus sind Fangzähne, insbesondere Vorwählklauen, vorgesehen, die das zu schaltende Gangrad so weit gegenüber der Schaltkulisse synchronisieren, dass die Schaltklauen widerstandslos und somit geräuscharm in die Schaltaufnahmen des Gangrades hinein geschoben werden können.

In vorteilhafter Ausgestaltung ist die Schaltkulisse gegenüber der Schiebemuffe um einen Winkel α schwenkbar angeordnet, wobei die Schaltkulisse auf der Getriebewelle drehfest und axial verschiebbar gelagert ist.

In vorteilhafter Weise steht die Schaltkulisse über eine Kulissenführung in Schaltkontakt mit einem radial nach innen weisenden Schaltfinger der Schiebemuffe.

In vorteilhafter Weise sind an der Schiebemuffe axial vorstehende Fangzähne, z. B. Vorwählklauen angeordnet, die beim Schalten eines Gangrades zunächst in die Aufnahmen des Gangrades eingreifen, die eine mehrfach große Winkellänge aufweisen, so dass die Vorwählklauen einfach einspuren können, um eine Drehzahlgeschwindigkeit des Gangrades an die Drehzahlgeschwindigkeit der Getriebewelle anzupassen.

Die Gangräder weisen zusätzlich auf einem kleineren Durchmesser angeordnete Aufnahmen für die Schaltklauen der Schaltkulisse auf, in welche die Schaltklauen nach der Drehzahlgeschwindigkeitsangleichung des Gangrades widerstandslos und somit geräuscharm eingreifen können.

Zur Anordnung der Aufnahmen ist es vorgesehen, dass diese in einer mit dem Gangrad verbundenen Adapterscheibe und/oder direkt in dem Gangrad angeordnet sind.

Bei dem bevorzugten Ausführungsbeispiel ist es vorgesehen, dass die Aufnahmen oder Taschen an den Losrädern und die Klauen an der Schiebemuffe bzw. an der Schaltkulisse angeordnet sind. Selbstverständlich besteht in vorteilhafter Weise auch die Möglichkeit, die Aufnahmen oder Taschen an der Schiebemuffe und der Schaltkulisse und die Klauen an den Losrädern anzuordnen.

Bei dem erfindungsgemäßen Verfahren zum Schalten der Klauenschaltung wird die Schiebemuffe zunächst zusammen mit der Schaltkulisse axial verschoben, bis die Vorwählklauen in die Aufnahmen des Gangrades eingreifen, daraufhin wird die Schaltkulisse um einen Schaltwinkel α gegenüber der Schiebemuffe geschwenkt, wodurch, durch die Steigung der Kulissenführung, eine Axialbewegung gegenüber der Schiebemuffe erzeugt wird, die zu einem Eingreifen der Schaltklauen in die Aufnahmen des Gangrades führen.

Weitere vorteilhafte Ausgestaltungen sind in den Unteransprüchen beschrieben. Ein Ausführungsbeispiel der Erfindung ist in den Zeichnungen dargestellt und wird im Folgenden beschrieben. Es zeigen
Fig. 1 eine Klauenschaltung in einer "Neutralstellung" im Schnitt in schematischer Darstellung.
Fig. 2 ein Gangrad im Querschnitt.
Fig. 3 die Klauenschaltung in einer "Synchronisationsstellung".
Fig. 4 die Klauenschaltung in einer "Schaltstellung".

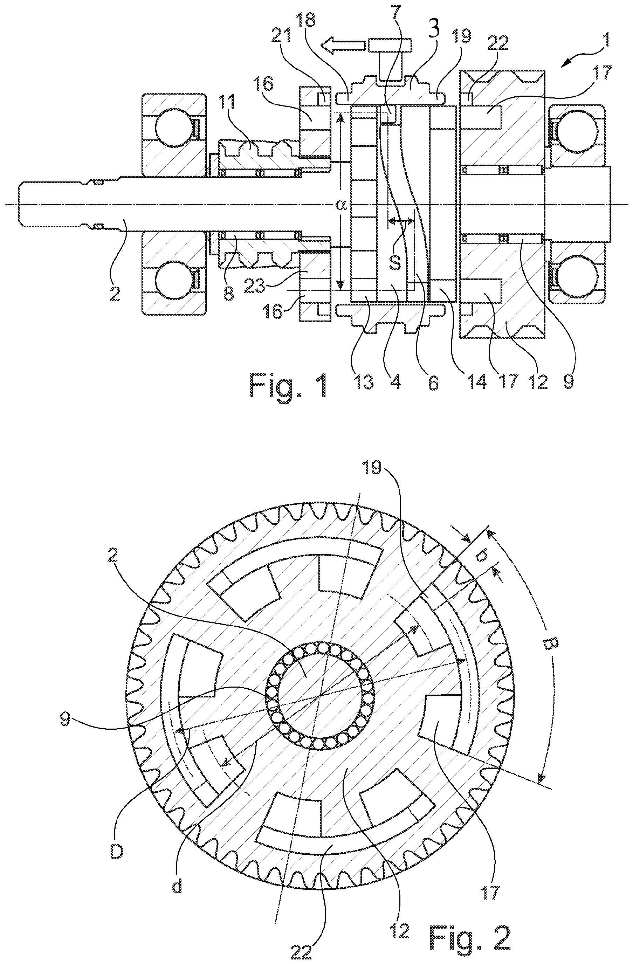

Eine Klauenschaltung 1 für ein mindestens zweistufiges Schaltgetriebe eines insbesondere elektromotorisch angetriebenen, Kraftfahrzeuges weist gemäß Fig. 1 eine Getriebewelle 2 und eine gegenüber der Getriebewelle 2 axial verschiebbar angeordnete Schiebemuffe 3 auf. Die Schiebemuffe 3 umgreift koaxial beabstandet die Getriebewelle 2 und weist in dem Abstand zwischen Getriebewelle 2 und Schiebemuffe 3 eine ringförmige Schaltkulisse 4, z. B in Form einer zylinderförmigen Schalthülse, auf. Die Schaltkulisse 4 ist mittels einer Innenverzahnung, die in eine Außenverzahnung der Getriebewelle 2 eingreift, drehfest und axial verschiebbar auf der Getriebewelle 2 angeordnet.

Die Schaltkulisse 4 weist an ihrem Umfang eine Kulissenführung 6 auf, die sich über einen Umfangswinkel α (α = z. B. 60 Grad) erstreckt und einen dem Schaltweg S entsprechenden axialen Versatz (Steigung) aufweist.

Ein radial nach innen weisender Vorsprung 7, z. B. ein Schaltfinger der Schiebemuffe 3 greift in die Kulissenführung 6 ein.

Auf der Getriebewelle 2 sind jeweils seitlich der Schiebemuffe 3 mittels Loslagern 8, 9 zwei Gangräder 11, 12 frei drehbar gelagert.

Die Schaltkulisse 4 weist stirnseitig, in axialer Richtung weisende gleichmäßig umfangsverteilt angeordnete Schaltklauen 13, 14 auf, die mit entsprechenden Aufnahmen 16, 17 der Gangräder 11, 12 in Eingriff bringbar sind.

Die Schiebemuffe 3 weist stirnseitig in axialer Richtung weisende, Vorsprünge 18, 19 , z. B. Vorwählklauen auf, die mit entsprechenden Aufnahmen 21, 22 der Gangräder 11, 12 in Eingriff bringbar sind.

Die Aufnahmen 21, 22, z. B. Taschen, in welche die Vorwählklauen 18, 19 eingreifen, sind auf einen größeren Durchmesser D angeordnet, als die Aufnahmen 16, 17 zur Aufnahme der Schaltklauen 13, 14, die auf einem kleineren Durchmesser d angeordnet sind.

Darüber hinaus weisen die Aufnahmen 21, 22 gegenüber den Vorwählklauen 18,19 mit einer Breite b ( Winkellänge ) eine mehrfach große Breite (Winkellänge) B auf, die auch größer ist, als eine Breite der Schaltklauen 13,14 und der Aufnahmen 16,17 für die Schaltklauen 13,14. Die Schaltklauen 13,14 sind hierbei so breit gewählt, dass diese im Wesentlichen mit Spielpassung formschlüssig in die Aufnahmen 16,17 eingreifen können.

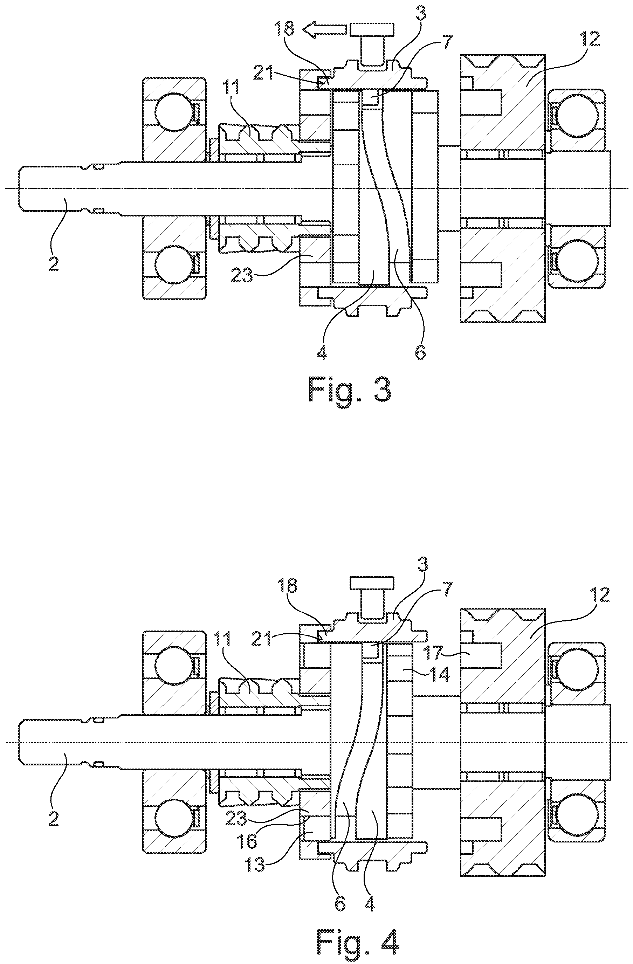

Im bevorzugten Ausführungsbeispiel gemäß Fig.1 bis 3 sind die Aufnahmen 22 für die Vorwählklauen 19 und die Aufnahmen 17 für die Schaltklauen 14 im Gangrad 12 angeordnet und die Aufnahmen 21 für die Vorwählklauen 18 und die Aufnahmen 16 für die Schaltklauen 13 in einer Adapterscheibe 23 angeordnet, die mit dem Gangrad 11 drehfest verbunden ist.

Beim bevorzugten Ausführungsbeispiel gemäß Fig.1 sind die Aufnahmen oder Taschen an den Losrädern und die Klauen an der Schiebemuffe bzw. an der Schaltkulisse angeordnet, selbstverständlich besteht auch die Möglichkeit, die Aufnahmen oder Taschen an der Schiebemuffe und der Schaltkulisse und die Klauen an den Losrädern anzuordnen.

Bei einem Schaltvorgang, ausgehend z. B. von einer zweiten Gangstufe (Gangrad 12) in eine erste Gangstufe (Gangrad 11) wird zunächst, das über die Getriebewelle 2 anstehende, Drehmoment kurzzeitig verringert, um ein Herausziehen der Schaltklauen 14 aus der Aufnahme 17 zu erleichtern.

Daraufhin werden die Schaltklauen 14 gemeinsam mit den Vorwählklauen 19 mittels der Schiebemuffe 3 in eine "Neutralstellung" axial verschoben. Die Schaltkulisse 4 wird über den Schaltfinger 7 mitgenommen.

Bei einer Schaltbewegung über die "Neutralstellung" hinaus, greifen die Vorwählklauen 18 in die Aufnahmen 21 des Gangrades 11 bzw. der Adapterplatte 23 ein und bewirken somit eine Drehzahlangleichung zwischen Getriebewelle 2 und Gangrad 11.

In einem letzten Schritt greifen die Schaltklauen 13 in die Aufnahmen 16 ein, in dem die Schaltkulisse 4 gegenüber der Schiebemuffe 3 eine Schwenkbewegung um den Winkel α ausführt und die Schaltkulisse 4 im Eingriff mit dem Schaltfinger 7, durch eine Steigung der Kulissenführung 6, um einen Schaltweg S gegenüber der Schiebemuffe 3 axial verschoben wird.

Selbstverständlich ist es bei kleinen axialen Abständen auch möglich, die Klauenschaltung 1 unter Last zu schalten. In diesem Fall werden bei Betätigung des Schiebemuffe 3 die Vorwählklauen 18 in das erste Gangrad 11 geschoben und durch den folgenden Drehimpuls die Schaltklauen 14 aus Hinterschneidungen des zweiten Gangrades 12 gezogen und anschließend direkt der erste Gang eingelegt.

### Bezugszeichenliste

- 1: Klauenschaltung
- 2: Getriebewelle
- 3: Schiebemuffe
- 4: Schaltkulisse
- 5 6: Kulissenführung
- 7: Schaltfinger
- 8: Loslager
- 9: Loslager
- 10 11: Gangrad (erste Gangstufe)
- 12: Gangrad (zweite Gangstufe)
- 13: Schaltklaue
- 14: Schaltklaue
- 15:
- 16: Aufnahme (13)
- 17: Aufnahme (14)
- 18: Vorwählklaue
- 19: Vorwählklaue
- 20 21: Aufnahme (18)
- 22: Aufnahme (19)
- 23: Adapterscheibe
- α: Schwenkwinkel (3-4)
- S: Schaltweg
- D: Durchmesser (21,22)
- d: Durchmesser (16,17)
- B: Breite (21,22)
- b: Breite (18,19)

## Patentansprüche

1. Klauenschaltung für ein mindestens zweistufiges Schaltgetriebe, mit einer Getriebewelle, zwei auf der Getriebewelle angeordneten Gangrädern und einer gegenüber der Getriebewelle axial verschiebbar angeordneten Schiebemuffe, **dadurch gekennzeichnet,**
**dass** zwischen der Getriebewelle (2) und der Schiebemuffe (3) eine ringförmige Schaltkulisse (4) angeordnet ist.

2. Klauenschaltung nach Anspruch 1, **dadurch gekennzeichnet,**
**dass** die Schaltkulisse (4) gegenüber der Schiebemuffe (3) um einen Schaltwinkel (a) schwenkbar angeordnet ist.

3. Klauenschaltung nach Anspruch 1 oder 2, **dadurch gekennzeichnet,**
**dass** die Schaltkulisse (4) eine Kulissenführung (6) aufweist, die mit einem radial nach innen weisenden Schaltfinger (7) der Schiebemuffe (3) in Schaltkontakt steht.

4. Klauenschaltung nach einem der Ansprüche 1 bis 3, **dadurch gekennzeichnet, dass** die Schaltkulisse (4) axial vorstehende Schaltklauen (13, 14) aufweist.

5. Klauenschaltung nach einem der Ansprüche 1 bis 4, **dadurch gekennzeichnet, dass** die Schiebemuffe (3) axial vorstehende Vorwählklauen (18, 19) aufweist.

6. Klauenschaltung nach einem der vorhergehenden Ansprüche, **dadurch gekennzeichnet,**
**dass** die Gangräder (11, 12) jeweils Aufnahmen (21, 22; 16, 17) für die Vorwählklauen (18, 19) und Schaltklauen (13, 14) aufweisen.

7. Klauenschaltung nach Anspruch 6, **dadurch gekennzeichnet,**
**dass** die Aufnahmen (21, 22) für die Vorwählklauen (18, 19) eine mehrfach größere Breite (B) aufweisen als die Breite (b) der Vorwählklauen (18,19).

8. Klauenschaltung nach Anspruch 6 oder 7, **dadurch gekennzeichnet,**
**dass** die Aufnahmen (21, 22) für die Vorwählklauen (18,19) auf einem größeren Durchmesser (D) angeordnet sind, als die Aufnahmen (16,17) für die Schaltklauen (13,14), die auf einem kleineren Durchmesser (d) angeordnet sind.

9. Klauenschaltung nach einem der Ansprüche 6 bis 8, **dadurch gekennzeichnet, dass** die Aufnahmen (16) des ersten Gangrades (11) in einer drehfest mit dem Gangrad (11) verbundenen Adapterscheibe (23) und
dass die Aufnahmen (17) des zweiten Gangrades (12) direkt in dem zweiten Gangrad (12) angeordnet sind.

10. Verfahren zum Schalten einer Klauenschaltung mit einer Vorwählklauen aufweisenden Schiebemuffe, einer Schaltklauen aufweisenden Schaltkulisse und einem Aufnahmen für die Vorwählklauen und Schaltklauen aufweisenden Gangrad, **dadurch gekennzeichnet,**
**dass** zunächst die Schiebemuffe (3) axial in Richtung Gangrad (11) verschoben wird, bis die Vorwählklauen (18) in die Aufnahmen (21) eingreifen,
**dass** daraufhin die Schaltkulisse (4) gegenüber der Schiebemuffe (3) eine Schwenkbewegung um den Winkel (α) durchführt, wodurch die Schaltkulisse (4) durch die Steigung der Kulissenführung (6) weiter axial in Richtung Gangrad (11) bewegt wird, bis die Schaltklauen (13) in die Aufnahmen (16) eingreifen.

## Claims

1. A speed coupling for an at least two-stage gearbox, having a gear shaft, two gear wheels arranged on the gear shaft and a sliding sleeve arranged axially displaceably with respect to the gear shaft, **characterised in that**
an annular shifting gate (4) is arranged between the gear shaft (2) and the sliding sleeve (3).

2. The speed coupling according to claim 1, **characterised in that**
the shifting gate (4) is arranged to be pivotable by a shifting angle (a) with respect to the sliding sleeve (3).

3. The speed coupling according to claim 1 or claim 2, **characterised in that**
the shifting gate (4) has a sliding block guide (6) which is in shifting contact with a radially inwardly pointing shifting finger (7) of the sliding sleeve (3).

4. The speed coupling according to any one of claims 1 to 3, **characterised in that** the shifting gate (4) has axially protruding shifting jaws (13, 14).

5. The speed coupling according to any one of claims 1 to 4, **characterised in that** the sliding sleeve (3) has axially protruding preselection jaws (18, 19).

6. The speed coupling according to any one of the preceding claims, **characterised in that**
the gear wheels (11, 12) each have receptacles (21, 22; 16, 17) for the preselection jaws (18, 19) and the shifting jaws (13, 14).

7. The speed coupling according to claim 6, **characterised in that**
the receptacles (21, 22) for the preselection jaws (18, 19) have a width (B) that is several times greater than the width (b) of the preselection jaws (18, 19).

8. The speed coupling according to claim 6 or claim 7, **characterised in that**
the receptacles (21, 22) for the preselection jaws (18, 19) are arranged on a larger diameter (D) than the receptacles (16, 17) for the shifting jaws (13, 14), which are arranged on a smaller diameter (d).

9. The speed coupling according to any one of claims 6 to 8, **characterised in that** the receptacles (16) of the first gear wheel (11) are arranged in an adapter disc (23) connected non-rotatably to the gear wheel (11) and
**in that** the receptacles (17) of the second gear wheel (12) are arranged directly in the second gear wheel (12).

10. A method for shifting a speed coupling with a sliding sleeve having preselection jaws, a shifting gate having shifting jaws and a receptacle for the gear wheel having preselection jaws and shifting jaws, **characterised in that**,
first the sliding sleeve (3) is moved axially in the direction of the gear wheel (11) until the preselection jaws (18) engage in the receptacles (21), **in that** the shifting gate (4) then pivots about the angle (a) relative to the sliding sleeve (3), whereby the shifting gate (4) is moved further axially in the direction of the gear wheel (11) by the incline of the sliding block guide (6) until the shifting jaws (13) engage in the receptacles (16).

## Revendications

1. Dispositif de crabotage à échappement pour une boîte de vitesses à au moins deux étages, comprenant un arbre de transmission, deux pignons de rapport disposés sur l'arbre de transmission et un manchon coulissant disposé de manière à pouvoir être déplacé axialement par rapport à l'arbre de transmission, **caractérisé en ce que**
une coulisse de changement de vitesse annulaire (4) est disposée entre l'arbre de transmission (2) et le manchon coulissant (3).

2. Dispositif de crabotage à échappement selon la revendication 1, **caractérisé en ce que**
la coulisse de changement de vitesse (4) est disposée de manière à pouvoir pivoter d'un angle de changement de vitesse (a) par rapport au manchon coulissant (3).

3. Dispositif de crabotage à échappement selon la revendication 1 ou 2, **caractérisé en ce que** la coulisse de changement de vitesse (4) comporte un guide de coulisse (6), lequel est en contact de changement de vitesse avec un doigt de changement de vitesse (7) dirigé radialement vers l'intérieur du manchon coulissant (3).

4. Dispositif de crabotage à échappement selon l'une quelconque des revendications 1 à 3, **caractérisé en ce que** la coulisse de changement de vitesse (4) comporte des crabots de changement de vitesse (13, 14) faisant saillie axialement.

5. Dispositif de crabotage à échappement selon l'une quelconque des revendications 1 à 4, **caractérisé en ce que** le manchon coulissant (3) comporte des crabots de présélection (18, 19) faisant saillie axialement.

6. Dispositif de crabotage à échappement selon l'une quelconque des revendications précédentes, **caractérisé en ce que**
les pignons de rapport (11, 12) comportent respectivement des logements (21, 22 ; 16, 17) pour les crabots de présélection (18, 19) et les crabots de changement de vitesse (13, 14).

7. Dispositif de crabotage à échappement selon la revendication 6, **caractérisé en ce que** les logements (21, 22) pour les crabots de présélection (18, 19) présentent une largeur (B) plusieurs fois supérieure à la largeur (b) des crabots de présélection (18, 19).

8. Dispositif de crabotage à échappement selon la revendication 6 ou 7, **caractérisé en ce que** les logements (21, 22) pour les crabots de présélection (18, 19) sont disposés sur un diamètre (D) supérieur par rapport aux logements (16, 17) pour les crabots de changement de vitesse (13, 14), lesquels sont disposés sur un diamètre (d) inférieur.

9. Dispositif de crabotage à échappement selon l'une quelconque des revendications 6 à 8, **caractérisé en ce que** les logements (16) du premier pignon de rapport (11) sont disposés dans un disque adaptateur (23) relié solidaire en rotation au pignon de rapport (11) et
les logements (17) du second pignon de rapport (12) sont disposés directement dans le second pignon de rapport (12).

10. Procédé de changement de vitesse d'un dispositif de crabotage à échappement comprenant un manchon coulissant comportant des crabots de présélection, une coulisse de changement de vitesse comportant des crabots de changement de vitesse et un logement pour le pignon de rapport comportant des crabots de présélection et des crabots de changement de vitesse, **caractérisé en ce que**
le manchon coulissant (3) est d'abord déplacé axialement dans la direction du pignon de rapport (11) jusqu'à ce que les crabots de présélection (18) viennent en prise dans les logements (21), **en ce que** la coulisse de changement de vitesse (4) réalise alors un mouvement de pivotement selon l'angle (a) par rapport au manchon coulissant (3), la coulisse de changement de vitesse (4) étant déplacée axialement plus loin dans la direction du pignon de rapport (11) par l'inclinaison du guide de coulisse (6) jusqu'à ce que les crabots de changement de vitesse (13) viennent en prise dans les logements (16).
